# EUROPÄISCHE PATENTANMELDUNG

(11) **EP 0 676 270 A1**
(43) Veröffentlichungstag der Anmeldung: **11.10.1995**
(21) Anmeldenummer: 95102786.1
(22) Anmeldetag: 27.02.1995
(51) Int. Cl.: B29C 47/38, B29B 17/02

(54) **Verfahren und Vorrichtung zum Herstellen eines aufschäumbaren Kunststoff**

(30) Priorität: 30.03.1994 DE 4411164
(71) Anmelder: Rieter Automatik GmbH, D-63757 Grossostheim (DE)
(72) Erfinder: Keilert, Jürgen, D-63839 Kleinwallstadt (DE); Nogossek, Alfred, D-38228 Salzgitter (DE)
(74) Vertreter: Bardehle, Heinz, Dipl.-Ing.

(57) **Zusammenfassung**

Die Erfindung betrifft ein Verfahren zum Herstellen eines aufschäumbaren Kunststoffs, zum Beispiel aus Polystyrol, mittels eines Extruders, in dessen Eingang (7) der Kunststoff eingespeist wird, dem über eine Begasungsöffnung (12) Treibgas in flüssiger Form, zum Beispiel Pentan, bei einem das Treibgas in flüssigem Zustand haltenden Druck zugeführt wird, wobei über einen folgenden Extruderbereich der mit dem Treibgas versehene Kunststoff homogenisiert wird. Zur Verarbeitung von wiederverwendbarem Kunststoffschaum wird dieser zerkleinert dem Extruder zugeführt, aus dem vor der Begasungsöffnung (12) über eine Entgasungsöffnung (10) in dem Kunststoffschaum enthaltene Gase abgeleitet werden, wobei die Entgasung so weit vom Eingang des Extruders erfolgt, daß der Kunststoff im Bereich der Entgasungsöffnung mindestens einen teigigen Zustand erreicht hat und Entgasung und Begasung in einem solchen Abstand voneinander vorgenommen werden, daß das der Begasungsöffnung zugeführte Treibgas gegen die Kunststoffströmung nicht in den Bereich der Entgasungsöffnung gelangen kann.

## Beschreibung

Die Erfindung bezieht sich auf ein Verfahren und eine Vorrichtung zum Herstellen eines aufschäumbaren Kunststoffs, zum Beispiel aus Polystyrol, mittels eines Extruders, in dessen Eingang der Kunststoff eingespeist wird, dem über eine Begasungsöffnung Treibgas in flüssiger Form, zum Beispiel Pentan, bei einem das Treibgas in flüssigem Zustand haltenden Druck zugeführt wird, wobei über einen folgenden Extruderbereich der mit dem Treibgas versehene Kunststoff homogenisiert wird. Dieser Kunststoff kann dann direkt zu Schaumstoffteilen verarbeitet werden.

Durch in einem folgenden Extruderbereich bewirkte Kühlung des Kunststoffs wird erreicht, daß dieser mit dem in ihm enthaltenen (gelösten) Treibgas von dem folgenden Extruderbereich als weiterverarbeitbares Material abgegeben wird, das sich dann durch Erhitzung in einen Kunststoffschaum verwandeln läßt, da aufgrund von Erhitzung das Treibgas aus dem Kunststoffmaterial austritt.

Bei dem Extruder kann es sich um eine Baugruppe handeln, bei der es sich im wesentlichen um den Extrudiervorgang handelt, wofür im wesentlichen die bekannte Schneckenpresse verwendet wird. Ergänzend kann er sich dabei aber auch um einen Knetvorgang handeln, wozu die Schneckenpresse in üblicher Weise mit Knetelementen ausgestattet wird.

Der Erfindung liegt die Aufgabe zugrunde, das Verfahren und die Vorrichtung so zu gestalten, daß sie für die Verarbeitung von wiederverwendbarem Kunststoffschaum geeignet ist. Dies geschieht dadurch, daß der wiederverwendbare Kunststoffschaum zerkleinert dem Extruder zugeführt wird, aus dem vor der Begasungsöffnung über eine Entgasungsöffnung in dem Kunststoffschaum enthaltene Gase abgeleitet werden, wobei die Entgasung so weit vom Eingang des Extruders erfolgt, daß der Kunststoff im Bereich der Entgasungsöffnung mindestens einen teigigen Zustand erreicht hat und Entgasung und Begasung in einem solchen Abstand voneinander vorgenommen werden, daß das der Begasungsöffnung zugeführte Treibgas gegen die Kunststoffströmung nicht in den Bereich der Entgasungsöffnung gelangen kann.

Hierdurch wird erreicht, daß dem zerkleinerten, wiederverwendbaren Kunststoffschaum die Möglichkeit gegeben wird, sich von dem in ihm enthaltenen Gas zu befreien, wozu das betreffende Kunststoffmaterial mindestens einen teigigen Zustand erreicht haben muß. Bei dem in dem wiederverwendbaren Kunststoffschaum enthaltenen Gas handelt es sich im wesentlichen um Luft, die ggf. Feuchtigkeit enthält, die vor der Weiterverarbeitung des Kunststoffmaterials entfernt werden muß. Die Begasungsöffnung zur Zuführung des Treibgases folgt dann in dem Extruder in solchem Abstand von der Endgasungsöffnung, daß das über die Begasungsöffnung zugeführte Treibgas gegen die Kunststoffströmung nicht in den Bereich der Entgasungsöffnung gelangen kann, es maß sich also dem mehr oder minder aufgeschmolzenen Kunststoffmaterial beimischen und löst sich in diesem, so daß für die Weiterverarbeitung das reine Kunststoffmaterial mit dem in ihm enthaltenen Treibgas zur Verfügung steht.

Diese Weiterverarbeitung kann dann direkt erfolgen. Es ist aber auch möglich, in dem folgenden Extruderbereich eine Kühlung herbeizuführen, so daß dem folgenden Extruderbereich für eine spätere Aufschäumung fertiges Kunststoffmaterial entnommen werden kann, aus dem dann in der oben beschriebenen Weise durch Erhitzung der gewünschte Schaumstoff erzeugt wird.

Die Vorrichtung zur Durchführung des vorstehend erläuterten Verfahrens gestaltet man zweckmäßig so, daß in Transportrichtung des Extruders nach dessen Eingang die Entgasungsöffnung angeordnet ist, auf die mit Abstand die Begasungsöffnung folgt, wobei der Abstand zwischen Entgasungsöffnung und Begasungsöffnung so gewählt ist, daß die Kunststoffströmung im Extruder das Treibgas von der Entgasungsöffnung fernhält. Die Entgasungsöffnung ist dabei dicht hinter dem Eingang des Extruders angeordnet, wogegen die Begasungsöffnung kurz vor dem folgenden Extruderbereich angeordnet ist, in dem der mit dem Treibgas versehene Kunststoff homogenisiert wird.

Zwischen der Entgasungsöffnung und der Begasungsöffnung läßt sich zweckmäßig eine weitere Öffnung zur Zuführung von Zusatzstoffen vorsehen, mit denen man die Eigenschaften des Kunststoffs in jeweils gewünschter Weise verändern kann.

Der der Homogenisierung und gegebenenfalls der Kühlung dienende Extruderbereich kann man als eigenen Extruder gestalten, der dem mit der Begasungsöffnung und der Entgasungsöffnung versehenen Extruder folgt. Dies ist besonders bei größeren Kunststoffdurchsätzen zweckmäßig.

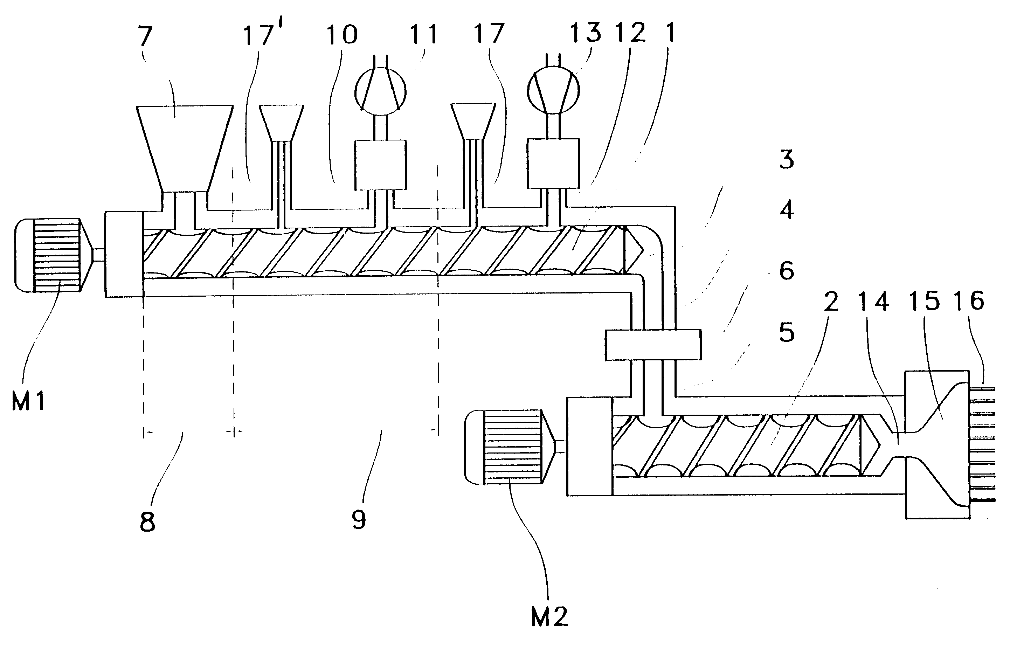

In der Figur ist ein Ausführungsbeispiel der Erfindung dargestellt.

Die Figur zeigt den Extruder 1 und den folgenden Extruder 2, wobei der Ausgang 3 des Extruders 1 über das Rohrstück 4 mit dem Eingang 5 des Extruders 2 verbunden ist. In das Rohrstück 4 ist ein Filter 6 eingebaut, der ggf. in dem verarbeiteten Kunststoff enthaltene Verunreinigungen zurückhält. Der Extruder 1 wird über den Motor M1 und der Extruder 2 über den Motor M2 angetrieben.

Der Extruder 1 wird über den Eingang 7 mit wiederverwendbarem Kunststoffschaum beschickt, der dann in dem Extruder 1 in Richtung auf dessen Ausgang 3 transportiert wird. Dabei wird das vom Extruder 1 verarbeitete Kunststoffmaterial aufgeschmolzen. Die betreffende Einzugs- und Aufschmelzzone erstreckt sich über die Länge 8. An diese schließt sich die Länge 9 als Entgasungszone an, in der dem hier mindestens in einem teigigen Zustand vorliegenden Kunststoffmaterial darin enthaltenes Gas entzogen wird, und zwar über die Entgasungsöffnung 10. An die Entgasungsöffnung 10 ist die Vakuumpumpe 11 angeschlossen, die dafür sorgt, daß das betreffende Kunststoffmaterial möglichst restfrei entgast wird. In der Nähe des Ausgangs 3 des Extruders 1 ist dann die Begasungsöffnung 12 angeordnet, durch die mit Hilfe der Hochdruckpumpe 13 Treibgas in das im Extruder 1 geförderte Kunststoffmaterial eingedrückt wird, das sich dem Kunststoffmaterial beimischt und in diesem löst. Dabei ist die Begasungsöffnung so weit von der Entgasungsöffnung 10 entfernt, daß das über die Begasungsöffnung 12 zugeführte Treibgas gegen die Kunststoffströmung nicht in den Bereich der Entgasungsöffnung 10 gelangen kann. Das zugeführte Treibgas bleibt also in vollem Umfang in dem geförderten Kunststoffmaterial enthalten.

Das derart aufgeschmolzene und mit Treibgas versehene Kunststoffmaterial gelangt dann über das Rohrstück 4 und den Filter 6 in die Eingangsöffnung 5 des Extruders 2, in dem das Kunststoffmaterial unter die Austrittstemperatur für das Treibgas gekühlt wird. Außerdem findet im Extruder 2 eine Homogenisierung des geförderten Kunststoffmaterials statt. Dieses wird dann am Ausgang 14 abgegeben und dem Strangformer 15 zugeführt, aus dem dann eine entsprechende Anzahl von Kunststoffsträngen 16 austritt, die aus dem fertigen, aufschäumbaren Kunststoffmaterial bestehen.

In der Figur sind noch hinter der Länge 9 und vor der Begasungsöffnung 12 Öffnungen 17 und 17' zur Zuführung irgendwelcher Zusatzstoffe vorgesehen, wie dies bei Extrudern zur Herstellung von compoundierten Kunststoffmaterialen üblich ist. Für diese Zuführung kann auch nur eine der beiden Öffnungen vorgesehen werden.

Nachstehend wird als Ausführungsbeispiel eine mögliche Ausführungsform der vorstehend beschriebenen Vorrichtung angegeben:

Die Länge der Einzugs- und Aufschmelzzone 8 beträgt bei Durchsatzleistungen bis 50 kg/h 8D (D = Schneckendurchmesser des Extruders). Bei größeren Durchsatzleistungen beträgt die Länge der Einzugs- und Aufschmelzzone 12D - 16D. Die Länge des Entgasungsbereiches 9 entspricht bei den vorstehend angegebenen Mindestdurchsatzleistungen 4D, bei größeren Durchsatzleistungen wird aus wirtschaftlichen Gründen 12D nicht überschritten. Im Bereich der Zuführung von Zusatzstoffen über die Öffnung 17 beträgt die dort notwendige Schneckenlänge 4D - 12D. Für den anschließenden Bereich, in dem das Treibgas unter Druck zugeführt wird, beträgt die Schneckenlänge 4D - 12D.

Der vorstehend beschriebene folgende Extruder 2 kann auch direkt mit dem Extruder 1 in Form eines durchgehenden Extruders verbunden sein, wodurch dann der oben erwähnte folgende Extruderbereich entsteht (der bei dem dargestellten Ausführungsbeispiel durch den Extruder 2 realisiert wird), in dem die Homogenisierung des Kunststoffmaterials und gegebenenfalls auch dessen Kühlung stattfindet. Wird das mit dem Treibgas versehene Kunststoffmaterial nicht gekühlt, so kann es direkt zur Herstellung von Teilen aus Schaumstoff verarbeitet werden. Wird dagegen das Kunststoffmaterial gekühlt, so kann wie bei dem in der Figur dargestellten Ausführungsbeispiel dieses zu Granulat verarbeitet werden.

## Patentansprüche

1. Verfahren zum Herstellen eines aufschäumbaren Kunststoffs, zum Beispiel aus Polystyrol, mittels eines Extruders, in dessen Eingang der Kunststoff eingespeist wird, dem über eine Begasungsöffnung (12) Treibgas in flüssiger Form, zum Beispiel Pentan, bei einem das Treibgas in flüssigem Zustand haltenden Druck zugeführt wird, wobei über einen folgenden Extruderbereich der mit dem Treibgas versehene Kunststoff homogenisiert wird, **dadurch gekennzeichnet**, daß zur Verarbeitung von wiederverwendbarem Kunststoffschaum dieser zerkleinert dem Extruder (1) zugeführt wird, aus dem vor der Begasungsöffnung (12) über eine Entgasungsöffnung (10) in dem Kunststoffschaum enthaltene Gase abgeleitet werden, wobei die Entgasung so weit vom Eingang (7) des Extruders (1) erfolgt, daß der Kunststoff im Bereich der Entgasungsöffnung (10) mindestens einen teigigen Zustand erreicht hat und Entgasung und Begasung in einem solchen Abstand voneinander vorgenommen werden, daß das der Begasungsöffnung (12) zugeführte Treibgas gegen die Kunststoffströmung nicht in den Bereich der Entgasungsöffnung (10) gelangen kann.

2. Verfahren nach Anspruch 1, **dadurch gekennzeichnet**, daß der mit dem Treibgas versehene Kunststoff in dem folgenden Extruderbereich (2) unter die Austrittstemperatur für das Treibgas gekühlt wird.

3. Vorrichtung zur Durchführung des Verfahrens nach Anspruch 1 oder 2, **dadurch gekennzeichnet**, daß in Transportrichtung des Extruders (1) nach dessen Eingang (7) die Entgasungsöffnung (10) angeordnet ist, auf die mit Abstand die Begasungsöffnung (12) folgt, wobei der Abstand zwischen Entgasungsöffnung (10) und Begasungsöffnung (12) so gewählt ist, daß die Kunststoffströmung im Extruder (1) das Treibgas von der Entgasungsöffnung (10) fernhält.

4. Vorrichtung nach Anspruch 3, **dadurch gekennzeichnet**, daß zwischen der Entgasungsöffnung (10) und der Begasungsöffnung (12) eine weitere Öffnung zur Zuführung (17) von Zusatzstoffen vorgesehen ist.

5. Vorrichtung nach Anspruch 3 oder 4, **dadurch gekennzeichnet**, daß zwischen dem Eingang (7) und der Entgasungsöffnung (10) eine weitere Öffnung (17') zur Zuführung von Zusatzstoffen vorgesehen ist.

6. Vorrichtung nach einem der Ansprüche 3 bis 5, **dadurch gekennzeichnet**, daß der Extruder (1) als Doppelschneckenextruder mit gleichsinnig drehenden Schnecken ausgebildet ist.

7. Vorrichtung nach einem der Ansprüche 3 bis 6, **dadurch gekennzeichnet**, daß an den mit der Begasungsöffnung (12) und der Entgasungsöffnung (10 versehenen Extruder (1) ein folgender Extruder (2) zur Kühlung des Kunststoffs unter die Austrittstemperatur des Treibgases angeordnet ist.
